**Europäisches Patentamt**

**European Patent Office**

**Office européen des brevets**

(19)

(11) Veröffentlichungsnummer : **0 043 522**
**B1**

(12)

# EUROPÄISCHE PATENTSCHRIFT

(45) Veröffentlichungstag der Patentschrift :
**15.05.85**

(51) Int. Cl.⁴ : **G 01 N 21/43**

(21) Anmeldenummer : **81104968.3**

(22) Anmeldetag : **26.06.81**

(54) **Refraktometer.**

(30) Priorität : **26.06.80 DE 3024061**

(43) Veröffentlichungstag der Anmeldung :
**13.01.82 Patentblatt 82/02**

(45) Bekanntmachung des Hinweises auf die Patenterteilung : **15.05.85 Patentblatt 85/20**

(84) Benannte Vertragsstaaten :
**AT BE CH DE FR GB IT LI LU NL SE**

(56) Entgegenhaltungen :
**DE-A- 2 642 891**
**DE-B- 2 306 091**
**FR-A- 1 140 517**
**US-A- 3 323 410**
**US-A- 4 011 015**
**TAPPI, Band 58, Nr. 6, Juni 1975, C.A. VOSSBERG: "Scanning refractometer for in line density measurement", Seiten 82-84**
**PATENTS ABSTRACTS OF JAPAN, Band 4, Nr. 188, 24. Dezember 1980**

(73) Patentinhaber : **Fuchs, Peter**
**Vimystrasse 4**
**D-8050 Freising (DE)**

(72) Erfinder : **Dobes, Karel, Dipl.-Ing.**
**Fafnerstrasse 8**
**D-8000 München (DE)**
Erfinder : **Fuchs, Peter, Grad. Ing.**
**Vimystrasse 4**
**D-8050 Freising (DE)**
Erfinder : **Rudolf, Otmar**
**Kantstrasse 24**
**D-8000 München (DE)**

(74) Vertreter : **KUHNEN & WACKER Patentanwaltsbüro**
**Schneggstrasse 3-5 Postfach 1729**
**D-8050 Freising (DE)**

## Beschreibung

Die Erfindung betrifft ein Refraktometer, insbesondere für die Messung bei kontinuierlichen Prozessen gemäß dem Oberbegriff des Anspruchs 1. Ein solches Refraktometer ist aus US-A-3 323 410 bekannt.

Derartige als Prozeß-Refraktometer bekannte optische Instrumente zur Bestimmung des Brechungsindexes dienen zur laufenden, d. h. kontinuierlichen sowie verfahrenstechnischen Messung von gasförmigen und flüssigen Medien, die auf ihre Zusammensetzungs-bzw. Mischungskonstanz hin laufend überprüft werden müssen, damit eventuelle Prozeßfehlsteuerungen möglichst frühzeitig korrigiert werden können. Dazu werden einzelne Proben oder vorzugsweise laufende Ströme von Nahrungsmitteln, wie beispielsweise Fruchtsäfte, Bier, Milchprodukte, Öle etc. oder Chemikalien, wie Säuren, Polymere, flüssige Lösungen usw. in Kontakt mit der Grenzfläche eines licht-beaufschlagten optischen Prismas gebracht. Entsprechend der mit einer Änderung der Medienzusammensetzung veränderten Lichtintensität wird diese in einer das Meßlicht erfassenden und auswertenden Vorrichtung, wie beispielsweise einer Fotozelle erfaßt und in einer anschließenden elektrischen Schaltung in entsprechende Meßwerte umgesetzt.

In der DE-B 23 06 091 ist ein Interferenzrefraktometer beschrieben, das als Vorrichtung zum Untersuchen der optischen Dichte strömender Medien eine Meßzelle, eine Vergleichzelle und eine Einrichtung zum Erfassen der entstandenen Lichtinterferenz aufweist. Dabei liegt diesem Interferenzrefraktometer, wie allen bekannten Refraktometern die Aufgabe zugrunde, eine durch Temperaturänderungen erzeugte Ungenauigkeit des Meßergebnisses zu beseitigen. Dazu wird vorgeschlagen, daß die optische Dichte der strömenden Medien so lange konstant bleibt, bis mittels einer mechanischen Verschiebeeinrichtung jeweils der entsprechende Resonanzpunkt eingestellt wird oder daß eine Regelschaltung vorgesehen wird, bei welcher die Änderung des Abstandes der Interferometerplatten auf Grund von Temperaturschwankungen ausgeregelt wird oder daß Einrichtungen zum periodischen Verändern der Länge zweier aufeinander abstimmbarer Zellen vorgesehen wird.

All diese Vorrichtungen und Lösungsvorschläge haben den Nachteil, daß eine getrennte Behandlung von Referenzlichtstrahlen nicht nur eine Prozeßverzögerung bewirkt, sondern daß auch das Meßergebnis verfälscht wird.

Es ist daher Aufgabe der Erfindung, ein Refraktometer der eingangs genannten Art gemäß dem Oberbegriff des Anspruchs 1 derart zu schaffen, daß Temperaturänderungen im Meßgut bzw. Meßmedium weder das Referenzlicht noch das Meßlicht unterschiedlich beeinflussen.

Diese Aufgabe wird durch die kennzeichnenden Merkmale des Anspruchs 1 gelöst. Vorteilhafte Weiterbildungen ergeben sich aus den abhängigen Ansprüchen.

Ein besonderer Vorteil der Erfindung ist darin zu sehen, daß das Referenzlicht zur Regelung der Lichtquelle verwendet werden kann und damit eine automatische Erhöhung der Genauigkeit erreicht wird. Außerdem ermöglicht die vorgeschlagene Lösung der Erfindung eine konzentrierte Aufbauform durch eine deutlich gebündelte und klare Lichtführung durch die Anordnung.

Nachfolgend sind weitere Vorteile der Erfindung anhand der Zeichnung zur Darstellung von Ausführungsbeispielen näher beschrieben. Darin zeigt :

Figur 1 die schematische Anordnung des optischen Lichtweges insbesondere durch einen bei der Erfindung verwendeten lichtprismatischen Körper und durch einen lichtbrechenden, bei der Erfindung verwendbaren Keil in Draufsicht ;

Figur 2 einen Schnitt entlang der Grenzfläche gemäß der Anordnung von Fig. 1 an dem lichtprismatischen Körper ; und

Figur 3 in gleicher Ansicht wie Fig. 2 die Unteransicht auf den lichtbrechenden Keil von Fig. 1 ;

Figur 4 in ähnlicher Darstellungsweise wie Fig. 1 eine andere Ausführungsform der Erfindung, bei welcher der lichtbrechende Keil durch eine Spiegelvorrichtung ersetzt ist, bei welcher der Keilwinkel gleich Null ist ;

Figur 5 eine Draufsicht auf die Spiegelvorrichtung gemäß Fig. 4 in ähnlicher Darstellung wie in Fig. 3 ;

Figur 6 eine weitere Ausführungsform der Erfindung in ähnlicher Darstellungsform wie Fig. 1 und Fig. 4, bei welcher ein Integral-Prismakörper vorgesehen ist ; und

Figur 7 eine Schnittansicht entlang der aktiven Grenzfläche von Fig. 6 auf den Integralprismakörper.

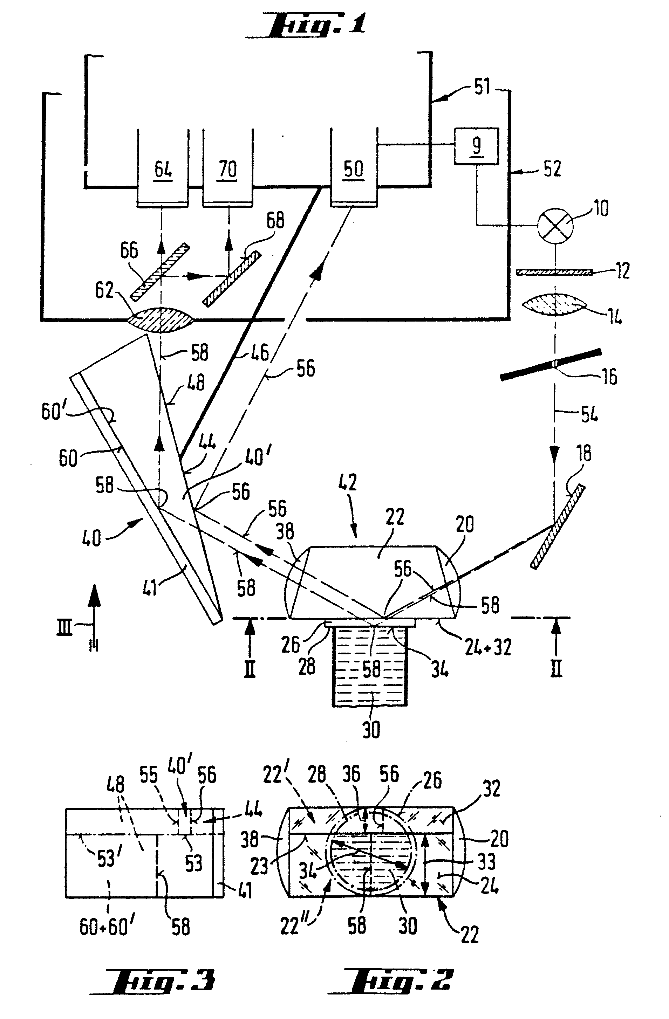

Gemäß Fig. 1 entsendet eine Lichtquelle 10, die als Halogenlampe mit einem breiten Spektrum ausgebildet ist, oder als Infrarotdiode, d. h. als monochromatische Lichtquelle ihre Lichtstrahlen durch eine Mattscheibe 12, eine Konvexlinse 14 und eine Maske 16 auf einen Spiegel 18, der die Lichtstrahlen durch eine plankonvex ausgebildete Eingangslinse 20 in ein Prisma 22 einleitet. An einer Basis bzw. Grundfläche 24 des Prismas 22 ist eine Saphirscheibe 26 mit einem geeigneten Klebstoff befestigt, so daß die planparallele Saphirscheibe 26 einerseits planparallel an dem Prisma 22 anliegt und andererseits eine freie Grenzfläche 28 bildet, an der die einfallenden Lichtstrahlen von der Lichtquelle 10 entsprechend der Dichteänderung des an der Grenzfläche anliegenden, bzw. vorbeiströmenden Mediums 30 unterschiedlich abgelenkt bzw. gebrochen werden.

Da das Prisma 22 an seiner Unterseite einen rechteckförmig ausgebildeten, randförmigen Spiegelbereich 32 aufweist, wird ein Teil des einfallenden Lichtes in diesem verspiegelten Bereich 32 unbeeinflußt von dem zu messenden Medium abgelenkt bzw. reflektiert, während an der verbleibenden aktiven Fläche 34 der Saphirscheibe 26 die Lichtstrahlen in Abhängigkeit von dem an der Grenzfläche 28 anliegenden bzw. vorbeiströmenden Medium entsprechend der Dichteänderung unterschiedlich gebrochen und reflektiert werden. Dadurch werden die einfallenden Lichtstrahlen in Referenzlichtstrahlen entsprechend der Brechung am Spiegelbereich 32 und in Meßlichtstrahlen entsprechend der Brechung an der aktiven Fläche 34 der Saphirscheibe 26 aufgeteilt.

Wenn daher das Meßgut bzw. das strömende Medium 30 Temperaturänderungen auf Grund geänderter Prozeßwärme oder sonstiger Umstände aufweist, dann wird der verspiegelte Bereich 32 ebenso wie die aktive Fläche 34 der Saphirscheibe 26 von der Temperaturänderung beeinflußt, da sich die aktive Fläche 34 der Saphirscheibe 26 über einen Überdeckungsbereich 36 in den verspiegelten Bereich 32 des Prismas 22 hinein erstreckt und die gesamte aktive Fläche 34 mit dem Überdeckungsbereich 36 von dem Meßgut bzw. strömenden Medium 30 beaufschlagt wird. Aus konstruktiven Gründen ist die aktive Fläche 34 meist etwas kleiner im Durchmesser als die Saphirscheibe 26. Somit liegen die Grenzfläche 28 und die Spiegelfläche des Spiegelbereichs 32 in planparallelen Ebenen.

Natürlich ist auch eine Ausführungsform ohne die Saphirscheibe 26 möglich, bei welcher die Spiegelfläche des Spiegelbereichs 32 an der Unterseite des Prismas 22 angeordnet ist und bei welcher das Meßgut bzw. das strömende Medium 30 eine Kreisfläche an der Basisgrundfläche 24 des Prismas 22 beaufschlagt, die beispielsweise der aktiven Fläche 34 mit dem Überdeckungsbereich 36 entspricht.

Das von der Grenzfläche 28 reflektierte Licht besteht daher zu einem Teil aus den Referenzlichtstrahlen und zu einem Teil aus den Meßlichtstrahlen, die das Prisma 22 durch eine plankonvexe Ausgangslinse 38 verlassen und auf einen lichtbrechenden Keil 40 treffen.

Die Eingangslinse 20 und die Ausgangslinse 38 sind an ihren planen Seiten mit den entsprechenden Flächen des Prismas 22 verbunden und vorzugsweise verklebt und bilden zusammen mit der Saphirscheibe 26 einen lichtprismatischen Körper 42.

Der lichtbrechende Keil 40, der ebenso wie der lichtprismatische Körper 42 vorzugsweise aus Glas besteht, weist ebenfalls einen rechteckförmig ausgebildeten teilspiegelförmigen Bereich 44 auf, der in seiner Breite dem Spiegelbereich 32 an der Basisgrundfläche 24 des lichtprismatischen Körpers 42 entspricht. Der Teilspiegelbereich 44 erstreckt sich jedoch nicht über den gesamten Randbereich des lichtbrechenden Keils 40 auf dessen dem lichtprismatischen Körper 42 zugewandten Seite, von der die aus dem lichtprismatischen Körper 42 kommenden Strahlen einfallen, sondern nur bis zu einer Abschirmung 46, so daß die Referenzlichtstrahlen, die von dem Spiegelbereich 32 des prismatischen Körpers 42 kommen, an dem Teilspiegelbereich 44 auf der Oberfläche 48 des lichtbrechenden Keils 40 reflektiert und entlang der Abschirmung 46 unbeeinflußt auf den entsprechenden Referenzlichtempfänger 50 einer Auswertvorrichtung 51 gelangen.

Der von der Lichtquelle 10 kommende Lichtstrahl 54 wird in dem lichtprismatischen Körper 42 nicht nur in die Referenzlichtstrahlen 56 sondern auch in die Meßlichtstrahlen 58 aufgeteilt, die durch den lichtbrechenden Glaskeil 40 hindurch auf dessen Unterseite 60 gelangen und dort reflektiert aus dem lichtbrechenden Keil 40 vorzugsweise an der Oberfläche 48 austreten und über eine Konvexlinse 62 konzentriert auf einen ersten Meßlichtempfänger 64 gelangen. Bei einer vorteilhaften Weiterbildung ist im Lichtgang der Meßlichtstrahlen 58 nach der Konvexlinse 62 noch eine teilweise durchlässige Streuscheibe 66 vorgesehen, an welcher vorzugsweise im Verhältnis 50 : 50 die Meßlichtstrahlen einerseits auf den ersten Meßlichtempfänger 64 gelangen und andererseits reflektiert und über einen weiteren Spiegel 68 gebeugt auf einen zweiten Meßlichtempfänger 70 gelangen, so daß je nach angeschlossener Elektronik an den Meßlichtempfängern 64 und 70 sogar zwei Komponenten in dem zu untersuchenden Medium 30 gemessen werden können.

Es liegt im Bereich des fachmännischen Könnens, den optischen Strahlengang sowohl hinsichtlich Linsensystem, Maskensystem und Aufteilung der Meßlichtstrahlen so zu variieren, daß weitere Komponenten, falls erwünscht, gemessen und berechnet werden können. Die aus dem Referenzlichtempfänger 50 ableitbaren Signale dienen neben der Berechnung und Verhältnisbildung auch zur Regelung der Helligkeit der Lichtquelle 10.

Wie bereits oben erwähnt, besteht der lichtbrechende Keil 40, der an der Oberfläche 48 den Teilspiegelbereich 44 für die Referenzlichtstrahlen 56 aufweist und an der Unterseite 60 die Spiegelfläche für die Meßlichtstrahlen 58 aufweist, vorzugsweise aus Glas und kann bei Bedarf aus glasähnlichem Material wie z. B. Kunststoff mit Glaseigenschaften ebenso hergestellt werden, wie der lichtprismatische Körper 42 und sonstige notwendige Linsen.

Hinsichtlich der optischen Anordnung kann daher zusammenfassend festgestellt werden, daß durch die Verwendung der selben Lichtstrahlen für Referenzlicht und Meßlicht im gleichen Strahlengang bis nach dem lichtprismatischen Körper 42 eine Temperaturkompensation erzielt wird, weil die Reflexion des Referenzlichtes im gleichen Prisma wie das Meßlicht gleichen temperaturbedingten Winkeländerungen des gesendeten Lichtes ausgesetzt ist. Es kann daher das Meßgut sogar mit variablen Temperaturen an dem Prisma vorbeigeleitet werden, ohne daß dadurch Fehlmessungen auftreten. Aus diesem Grunde können auch Lichtstrahlen beliebiger Wellenlänge für die Lichtquelle 10 verwendet werden, da das Referenzlicht ebenso wie das Meßlicht durch das Prisma geleitet wird und somit gleiche Temperatureinflüsse vorliegen.

Bei dem Gesamtgerät werden meist Ultraschallwellen im Impulsbetrieb auf den Meßkopf, der das zu prüfende Medium oder das durchströmende Medium enthält, geleitet, um so Meßflächenverunreinigungen durch die Ultraschallerschütterungen zu lockern und das strömende Medium abzuspülen. Innerhalb des Gerätes, das vorzugsweise mit Infrarotdioden für die Lichtquelle bestückt wird, ist ein opto-elektrischer Analog-Digitalwandler hinter der die Optik enthaltenden Kammer angeordnet, dessen Temperierung vorzugsweise durch Peltierelemente bewirkt wird, da kritische elektronische Teile wie die fotoelektronischen Meßsensoren möglichst temperaturstabilisiert betrieben werden sollen. Mit dem Analog-Digitalwandler ist ein Mikroprozessor verbunden, der nicht nur alle Steuerungs- und Regelungsaufgaben, sondern primär die Verarbeitung der Meßimpulse in vielstellige Anzeigen ermöglicht. Es liegt im Bereich einer Abwandlung der ersten Ausführungsform, daß der lichtbrechende Keil 40 nicht als vollständiger Keil mit einer verspiegelten Fläche und einer lichtbrechenden Fläche versehen ist, sondern daß der Keil auf eine Breite beschränkt ist, die dem verspiegelten Bereich 32 des lichtprismatischen Körpers 42 entspricht. Dadurch fällt der Meßlichtstrahl 58 nicht durch den lichtbrechenden Keil 40, sondern auf eine lichtreflektierende Fläche 60', die der Bodenseite 60 des Keils 40 entspricht. Dies bedeutet, daß der lichtbrechende Keil 40 im Bereich des fachmännischen Könnens durch einen Teil-Keil 40' ersetzt wird, der auf einem Träger 41 angeordnet ist. In diesem Falle muß der Keil 40' etwa die Breite des verspiegelten Bereichs 32 des lichtprismatischen Körpers 42 aufweisen. Die Länge des Teil-Keils 40' muß maximal bis zu der Abschirmung 46 reichen. Die übrige durch den Teil-Keil 40' nicht abgedeckte Fläche des Trägers 41, welche der Bodenseite 60 eines Vollkeiles entsprechen würde, ist dann als reflektierende Fläche 60' auszubilden, damit der Meßlichtstrahl 58 an dieser reflektierenden Fläche abgelenkt bzw. reflektiert und auf den Meßlichtempfänger 64 gelenkt wird. Die reflektierende Fläche wird vorzugsweise als Spiegelfläche ausgebildet. Dies bedeutet, daß bei einer solchen Ausführungsform der Träger 41 ein Spiegel ist, auf dem der Teil-Keil 40' angeordnet ist und wobei der Teil-Keil 40' an seiner, der Spiegelfläche 60 abgewandten und der dem Prisma 22 zugewandten Seite, d. h. der freien Seite ebenfalls verspiegelt ist, so daß der Referenzlichtstrahl 56 von der Spiegelfläche des Teil-Keils 40' und der Meßlichtstrahl 58 von der Spiegelfläche 60' jeweils abgelenkt wird.

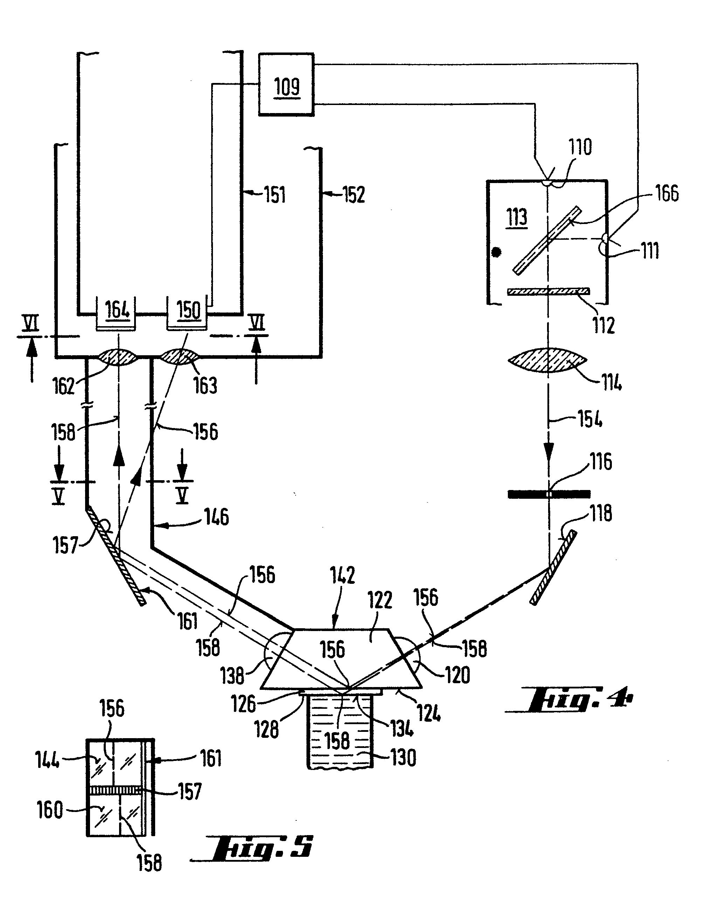

Es liegt ferner im Rahmen des fachmännischen Könnens, das Prisma 22 durch einen Längsschnitt derart zu teilen, daß der sich über dem verspiegelten Bereich 32 befindliche Teil des Prismas ein Referenzlichtprisma 22' bildet und daß der über dem Meßlichtbereich 33 befindliche Teil des Prismas 22 ein Meßlichtprisma 22" bildet. Das Referenzlichtprisma 22' und das Meßlichtprisma 22" sind derart nebeneinander angeordnet, daß sie das gemeinsame Prisma 22 ergeben. Eine Sicherung dieser Anordnung wird vorzugsweise mit einem entsprechenden Klebstoff erreicht. Hierzu können alle für die Verklebung von optischen Bauteilen aus Glas od, dgl. geeignete Klebstoffe verwendet werden, wobei beispielsweise ein schwarz eingefärbter Klebstoff die Gefahr einer gegenseitigen Lichtbeeinflussung durch Streuungen im optischen Material unterdrücken helfen kann. Diese Trennfläche zwischen dem Referenzlichtprisma 22' und dem Meßlichtprisma 22" ist in der Schnittdarstellung gemäß Fig. 2 durch eine Trennlinie 23 dargestellt.

Bei der Darstellung gemäß Fig. 3, welche bei der abgewandelten Ausführungsform schematisch die Draufsicht auf die reflektierende Fläche 60' mit dem aufgesetzten Teil-Keil 40' zeigt, entspricht die reflektierende Fläche 60' bzw. die vorzugsweise verspiegelte Fläche 60' in ihrer Breite dem Meßlichtbereich 33 des Meßlichtprismas 22", während die Breite des Teil-Keils 40' der Breite des Referenzlichtprismas 22' entspricht, so daß sich dadurch eine Keiltrennlinie 53 ergibt, welche einer Teil-Keil-Seitenwand entspricht, die der reflektierenden bzw. verspiegelten Fläche 60' zugewandt ist. Je nachdem, wie lange der Teil-Keil 40' ausgebildet wird, verschiebt sich eine vordere Stirnseite 55 des Teil-Keils 40' senkrecht zur Keiltrennlinie 53 entlang einer strichpunktierten Linie 53', wobei eine Länge des Teil-Keils bis zu der Abschirmung 46 bevorzugt wird.

Eine andere Ausführungsform der Erfindung, die der Darstellungsform von Fig. 1 entspricht, ist in Fig. 4 dargestellt. Einander entsprechende Bauteile sind mit entsprechenden Bezugszeichen versehen, so daß das Prisma 22 von Fig. 1 durch das Prisma 122 von Fig. 4, der Referenzlichtstrahl 56 von Fig. 1 durch den Referenzlichtstrahl 156 von Fig. 4, der Meßlichtstrahl 58 von Fig. 1 dem Meßlichtstrahl 158 usw. entspricht. Damit weisen sämtliche Bauteile und Bezeichnungen die gleiche Funktion auf, wenn sie gleiche Bezugszeichen in der Zeichnung haben und unterscheiden sich durch die jeweilige Hunderterzahl nur nach ihren jeweiligen Ausführungsformen.

Bei der Ausführungsform gemäß Fig. 4 ist die Lichtquelle 110 eine geregelte Halbleiterlichtquelle, die in einer lichterzeugenden Vorrichtung 113 angeordnet ist. In dieser Vorrichtung ist ferner eine zweite Lichtquelle 111 angeordnet, welche zu der ersten Lichtquelle 110 räumlich vorzugsweise um 90° versetzt angeordnet ihr Licht auf einen teildurchlässigen Spiegel 166 entsendet. Der teildurchlässige Spiegel 166 ist vorzugsweise als halbdurchlässiger Spiegel ausgebildet, wobei andere Teilungsverhältnisse von der Ausbildung der beiden Lichtquellen 110 und 111 abhängen. Während der von der Lichtquelle 110 ausgehende Lichtstrahl voll durch den teildurchlässigen Spiegel 166 hindurchtritt, werden die von der zweiten Lichtquelle 111 ausgesandten Lichtstrahlen an dem teildurchlässigen Spiegel 166 derart abgelenkt, daß im optischen Weg daran anschließend beide ausgesandten Lichtstrahlen einen gemeinsamen Weg haben.

Je nach Verwendungszweck des Refraktometers werden die beiden Lichtquellen 110 und 111, welche vorzugsweise unterschiedliche Wellenlängenbandbreiten aufweisen, alternierend oder gleichzeitig von einer Regeleinrichtung 109 gesteuert.

Gemäß Fig. 4 wird das von der lichterzeugenden Vorrichtung 113 erzeugbare Licht durch eine vorteilhafterweise vorgesehene Mattscheibe 112 und durch eine vorzugsweise konvex ausgebildete Linse 114 auf eine maskenförmig ausgebildete Blende 116 gerichtet, welche in ihrer Maskenfunktion der Aufgabenstellung des Refraktometers angepaßt ist. Davon abhängig treffen die von der lichterzeugenden Vorrichtung 113 erzeugten Lichtstrahlen 154 ganz oder geteilt auf einen Ausrichtspiegel 118, der die Lichtstrahlen 154 auf die dem Prisma 122 vorgesetzte Eingangslinse 120 richtet, sofern eine solche Eingangslinse 120 durch die Aufgabenstellung des Refraktometers erwünscht ist.

In gleicher Weise wie bei der Ausführungsform gemäß Fig. 1 werden die Lichtstrahlen 154 durch den entsprechenden Spiegelbereich an der Prismagrundfläche 124 bzw. an der aktiven Fläche 134 der Saphirscheibe 126 geteilt und durch die vorzugsweise vorgesehene Ausgangslinse 138 auf eine Spiegelvorrichtung 161, im folgenden « Trennspiegel » genannt, gelenkt. Dabei werden der Referenzlichtstrahl 156 und der Meßlichtstrahl 158, der in seiner Intensität von der Probe 130 abhängt, zu den jeweiligen Lichtempfängern umgelenkt.

Der Trennspiegel 161 entspricht in seiner Funktion dem lichtbrechenden Keil 40 gemäß Fig. 1, wobei der durch den Keil eingeschlossene Winkel auf Null reduziert ist. Der in Fig. 4 gezeigte Strahlengang des Referenzlichtstrahles 156 verläuft in Wirklichkeit parallel zu dem Meßlichtstrahl 158.

Der auf den Referenzlichtbereich auftreffende Referenzlichtstrahl 156 wird vorzugsweise durch eine Sammellinse 163 auf den Referenzlichtempfänger 150 gelenkt. Der in seiner Lichtintensität schwankende Meßlichtstrahl 158 wird in einem reflektierenden Meßlichtbereich 160 abgelenkt und ebenfalls durch eine Sammellinse 162 auf einen Meßlichtempfänger 164 gelenkt, wobei bei der Ausführungsform gemäß Fig. 4 eine Abschirmung 146 vorgesehen ist, die den Meßlichtstrahl kammerförmig gegen den Referenzlichtstrahl 156 und sonstige Einflüsse abschirmt.

Da der Meßlichtstrahl 158 parallel jedoch seitlich versetzt zu dem Referenzlichtstrahl 156 verläuft, fallen in Wirklichkeit die Sammellinse 163 mit der Sammellinse 162 und der Referenzlichtempfänger 150 mit dem Meßlichtempfänger 164 in der Zeichenebene annähernd zusammen, so daß aus Gründen der Veranschaulichung die Auswertvorrichtung 150 und die Sammellinse 163 und 90° in die Zeichenebene gekippt wurden.

Gemäß Fig. 5 ist in einer Darstellung ähnlich der von Fig. 3 eine Draufsicht auf den Trennspiegel 161 gezeigt, der zwei durch eine schwarze Trennfläche 157 getrennt Bereiche darstellt. Die Breite der schwarzen Trennfläche 157 wird je nach Verwendungszweck des Refraktometers bemessen und kann im Extremfall auf eine Trennlinie reduziert werden. Die beiden durch die Trennfläche 157 gebildeten Bereiche sind ein Referenzlichtbereich 144 und einen Meßlichtbereich 160.

Die Auswertvorrichtung 151 und die Meßlichtempfängervorrichtung 164 sind vorzugsweise in eine temperierbare Haltevorrichtung 152 eingebaut.

Gemäß Fig. 6 ist eine weitere Ausführungsform der Erfindung dargestellt, wobei der Prismakörper 222 gegenüber dem Prismakörper 122 von Fig. 4 oder 22 von Fig. 1 um 180° gedreht dargestellt ist, so daß die Basis des Prismakörpers 222 in der Darstellung nach oben zeigt und die der Basis gegenüberliegende Seite des Prismakörpers 222 die funktionsmäßige Grundfläche 224 bildet. An die Grundfläche 224 ist in gleicher Weise die Saphirscheibe 226 bei den bisherigen Ausführungsformen angebracht.

Der Ausrichtspiegel 118 gemäß Fig. 4 bzw. 18 gemäß Fig. 1 ist in der Ausführungsform gemäß Fig. 6 in die Prismaschrägfläche des Prismas 222 derart integriert, daß das einfallende Licht aus der Lichterzeugungsvorrichtung 213 an der Prismaschrägfläche 218 abgelenkt und auf den verspiegelten Referenzlichtbereich 232 bzw. den Meßlichtbereich 233 gelenkt wird. Von diesen Bereichen gelangt das Referenzlicht 256 auf eine Trennspiegelfläche 261, welche der Trennspiegelfläche 161 gemäß Fig. 4 entspricht und von der anderen Prismagrenzfläche gebildet wird. In ähnlicher Weise gelangt der Meßlichtstrahl 258, der in seiner Intensität von der Probe 230 beeinflußt wird, von der aktiven Grenzfläche 234 ebenfalls zu dem anderen Bereich des Trennspiegels 261 und von da durch die Abschirmung 246 geschützt durch eine Sammellinse 262 auf den Meßlichtempfänger 264, während der Referenzlichtstrahl 256 von dem Referenzlichtbereich des Trennspiegels 261 durch eine Sammellinse 263 auf den Referenzlichtempfänger 250 gelangt. Zur Verdeutlichung des Verlaufs des Referenzlichtstrahles 256 wurde ein gemäß Fig. 4 entsprechender Verlauf des Referenzlichtstrahles 156 gewählt. Dementsprechend sind auch der Referenzlichtempfänger 250 und die Sammellinse 263 um 90° in die Zeichenebene gekippt.

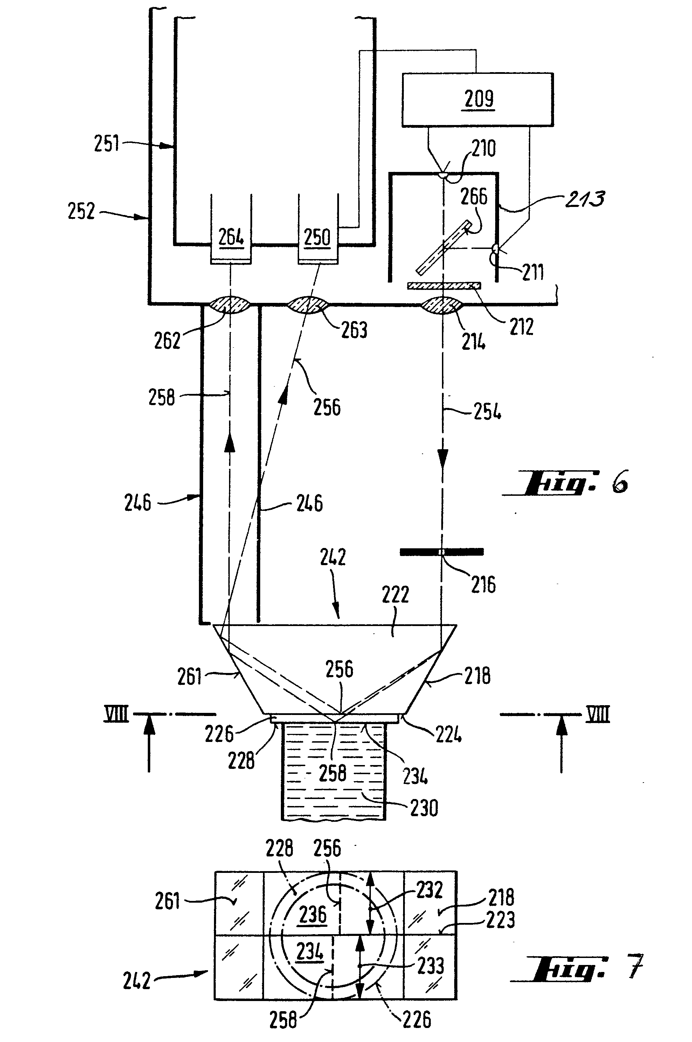

Gemäß der Darstellung von Fig. 7, welche im wesentlichen der Darstellung gemäß Fig. 2 entspricht, ist ein Schnitt entlang der aktiven Grenzfläche 234 dargestellt und zeigt eine von der Probe 230 abgewandte Ansicht. Der prismatische Körper 242 kann an der Trennlinie 223 ebenfalls geteilt sein, wie bereits oben beschrieben. Bei der Ausführungsform gemäß Fig. 6 und Fig. 7 ist der Referenzlichtbereich nahezu gleich breit wie der Meßlichtbereich 233 dargestellt, wobei die Breite der jeweiligen Bereiche ebenfalls nach der Aufgabenstellung des Refraktometers gewählt wird.

Die Meßlichtempfangsvorrichtung 264 und die Referenzlichtauswertvorrichtung sind an eine entsprechende elektronische Schaltung angeschlossen, an welche auch der Regler 209 angeschlossen ist, der die Lichtquellen 210 und 211 beeinflußt.

Es liegt im Bereich des fachmännischen Könnens, daß Anschlüsse für eine Vielzahl von Anzeigemöglichkeiten, die nicht nur die einzelnen Betriebsphasen sinnvoll wiedergeben, vorgesehen sind, sondern daß auch Meßschreiber und dgl. anschließbar sind. Wichtig bei dieser Erfindung ist das Prinzip der automatischen Temperaturkompensation des Meßsystems durch die vorgeschriebene gemeinsame Behandlung von Referenz- und Meßlichtstrahlen, so daß Temperatureinflüsse des Mediums auf das Meßsystem kompensiert werden.

**Patentansprüche**

1. Refraktometer zur Überwachung des Brechungsindex eines Mediums, insbesondere eines kontinuierlichen Prozeßstroms, mit einer Lichtquelle (10 ; 113 ; 212), zur Erzeugung eines Strahlenbündels (54 ; 154 ; 254), einem lichtprismatischen Körper (42 ; 142 ; 242) der eine zumindest teilweise mit dem Medium (30 ; 130 ; 230) in Kontakt stehende ebene Grenzfläche (28 ; 128 ; 228) aufweist, die von der dem Medium abgewandten Seite her mit dem Strahlenbündel unter einem schrägen Einfallswinkel beaufschlagt ist, Einrichtungen (32 ; 33 ; 232, 233) zur Erzeugung eines Meßstrahls (58 ; 158 ; 258) mit einer vom Brechungsindex des Mediums abhängigen Intensität sowie eines Referenzstrahls (56 ; 156 ; 256) mit einer vom Brechungsindex unabhängigen Intensität jeweils aus dem auf die Grenzfläche (24 ; 124 ; 224) auftreffenden Strahlenbündel, einer Auswertvorrichtung (51 ; 151 ; 251) zur Bildung einer dem Verhältnis der Intensitäten des Meß- und des Referenzstrahls entsprechenden Größe, welche Vorrichtung einen Meßlichtempfänger (64 ; 164 ; 264) und einen Referenzlichtempfänger (50 ; 150 ; 250) aufweist, sowie einer Anzeigeeinrichtung für diese Größe, dadurch gekennzeichnet, daß die Einrichtungen zur Erzeugung des Meß- und des Referenzstrahls aus zwei aneinander angrenzenden und jeweils von einem Teil des Strahlenbündels (54 ; 154 ; 254) beleuchteten Bereichen (32, 33 ; 232, 233) der Grenzfläche (28 ; 128 ; 228) bestehen, von denen einer transparent und der andere verspiegelt ist, wobei das Medium (30 ; 130 ; 230) mit dem transparenten Bereich (33 ; 233) in unmittelbarem Kontakt und zumindest teilweise mit dem verspiegelten Bereich (32 ; 232) in thermisch leitender Verbindung steht.

2. Refraktometer nach Anspruch 1, dadurch gekennzeichnet, daß die Grenzfläche (28 ; 128 ; 228) auf der dem berührenden Medium (30 ; 130 ; 230) zugewandten Seite von einer Schutzscheibe (26 ; 126 ; 226) gebildet wird, die mit einem in dem lichtprismatischen Körper (42 ; 142 ; 242) enthaltenen Prisma (22 ; 122 ; 222) verbunden ist.

3. Refraktometer nach Anspruch 2, dadurch gekennzeichnet, daß die Schutzscheibe von einer Saphirscheibe (26 ; 126 ; 226) gebildet ist.

4. Refraktometer nach Anspruch 1 oder 2, dadurch gekennzeichnet, daß der lichtprismatische Körper (42 ; 142) auf der Lichteinfallseite und/oder auf der Lichtausfallseite eine plankonvexe Eingangslinse (20 ; 120) bzw. plankonvexe Ausgangslinse (38 ; 138) aufweist.

5. Refraktometer nach einem der Ansprüche 1 bis 4, dadurch gekennzeichnet, daß im Lichtweg des aus dem lichtprismatischen Körper (42) kommenden Lichtes ein Glaskeil (40) angeordnet ist, mit welchem der aus dem lichtprismatischen Körper (42) kommende Meß- (58) und Referenzstrahlt (56) in einen Referenzlichtbereich und Meßlichtbereich trennbar sind.

6. Refraktometer nach Anspruch 5, dadurch gekennzeichnet, daß der lichtbrechende Glaskeil (40) einen verspielgelten Bereich (44) auf der dem einfallenden Licht zugewendten Seite (48), an welcher der Referenzstrahl (56) abgelenkt wird, aufweist, und daß der Meßstrahl (58) an der Bodenseite (60) des Keils (40) abgelenkt bzw. gespiegelt wird.

7. Refraktometer nach einem der Ansprüche 3 bis 6, dadurch gekennzeichnet, daß der lichtprismatische Körper (42) eine rechteckige Grundfläche (24) aufweist, und daß an der Grundfläche (24) die kreisförmig ausgebildete, die aktive, d. h. vom Medium berührte Grenzfläche (34) tragende Saphirscheibe (26) angeordnet, ist wobei die aktive Fläche (34) kleiner als der Durchmesser der Saphirscheibe (26) ist.

8. Refraktometer nach einem der vorhergehenden Ansprüche, dadurch gekennzeichnet, daß das von dem Referenzlichtempfänger (50 ; 150 ; 250) erzeugte Signal einem Regler (9 ; 109 ; 109) zugeführt wird, welcher die Lichtquelle (10 ; 113 ; 213) in der Helligkeitsintensität und/oder der Wellenlängenbandbreite stabilisiert.

9. Refraktometer nach einem der vorhergehenden Ansprüche, dadurch gekennzeichnet, daß der lichtprismatische Körper (42 ; 142 ; 242) in ein Referenzlichtprisma (22') und ein Meßlichtprisma (22'') geteilt ist.

10. Refraktometer nach Anspruch 9, dadurch gekennzeichnet, daß das Referenzlichtprisma (22') mit dem Meßlichtprisma (22'') durch einen Klebstoff verbunden ist.

11. Refraktometer nach Anspruch 9 oder 10, dadurch gekennzeichnet, daß das Referenzlichtprisma (22') mit dem Meßlichtprisma (22'') durch eine dunkle Zwischenschicht verbunden ist.

12. Refraktometer nach einem der Ansprüche 5 bis 11, dadurch gekennzeichnet, daß der Glaskeil (40) auf einem Träger (41) angeordnet ist.

13. Refraktometer nach Anspruch 12, dadurch gekennzeichnet, daß die Breite des lichtbrechenden Keils (40') der Breite des den Referenzstrahl erzeugenden verspiegelten Bereiches (32) der Grenzfläche (28) entspricht und daß der freibleibende Bereich des Trägers (41) eine reflektierende Fläche (60') aufweist, an welcher der Meßstrahl (58) reflektiert wird.

14. Refraktometer nach Anspruch 7, dadurch gekennzeichnet, daß der verspiegelte Bereich (32) am lichtprismatischen Körper (42) sich rechteckförmig entlang eines Randbereiches in der Prismagrundfläche (24) erstreckt und einen Teil (36) der Saphirscheibe abdeckt.

15. Refraktometer nach einem der Ansprüche 5 bis 14, dadurch gekennzeichnet, daß der lichtprismatische Körper (42) und/oder der Keil (40) aus Glas oder Plexiglas oder einer anderen glasähnlichen Substanz besteht.

16. Refraktometer nach einem der vorhergehenden Ansprüche, dadurch gekennzeichnet, daß an dem Glaskeil (40) eine Abschirmug (46 ; 146) derart angebaut ist, daß sich der Referenzstrahl (56 ; 156) und der Meßstrahl (58 ; 158) gegenseitig nicht beeinflußen.

17. Refraktometer nach einem der vorhergehenden Ansprüche, dadurch gekennzeichnet, daß eine Begrenzugsfläche (224) des lichtprismatischen Körpers (222) der Basisfläche derart gegenüberliegend angeordnet ist, daß die Basisfläche die Grundfläche (224) in Projektionsrichtung überdeckt.

18. Refraktometer nach Anspruch 17, dadurch gekennzeichnet, daß eine Prismaschrägfläche (218) als reflektierende Fläche derart ausgebildet ist, daß das einfallende Strahlenbündel (254) auf den verspiegelten Bereich (232) und den transparenten Bereich (233) gelenkt wird.

19. Refraktometer nach einem der Ansprüche 17 oder 18, dadurch gekennzeichnet, daß eine zweite Prismaschrägfläche als Spiegelfläche (261) ausgebildet ist, an welcher der Meßstrahl (258) und der Referenzstrahl (256) getrennt reflektiert werden.

20. Refraktometer nach einem der vorhergehenden Ansprüche, dadurch gekennzeichnet, daß der Meßlichtempfänger (64 ; 164 ; 264) und der Referenzlichtempfänger (50 ; 150 ; 250) in einem Gesamtempfänger zusammengefaßt sind und die davon gewonnenen Signale alternierend der Auswertvorrichtung zuführbar sind.

21. Refraktometer nach Anspruch 1 bis 20, dadurch gekennzeichnet, daß die Lichtquelle (10) mindestens eine Infrarotdiode oder eine Halogenlampe oder eine sonstige Lampe mit einem vorbestimmten Frequenzspektrum aufweist.

22. Refraktometer nach einem der Ansprüche 1 bis 21, dadurch gekennzeichnet, daß die Grenzfläche (28) mit Ultraschall kontinuierlich und/oder impulsweise beaufschlagt und durch die Strömung des zu untersuchenden Mediums (30) gereinigt wird.

23. Refraktometer nach einem der Ansprüche 7 bis 22, dadurch gekennzeichnet, daß der verspiegelte Bereich (32) in der Schutzscheibe (26) oder der aktiven Grenzfläche (34) angeordnet ist.

**Claims**

1. A refractometer for monotoring the refractive index of a medium, particularly of a continuous process stream, comprising a light source (10 ; 113 ; 213) for generating a bundle of rays (54 ; 154 ; 254) ; a prism-action optical body (42 ; 142 ; 242), which has a planar boundary surface (28 ; 128 ; 228), which at least in part is in contact with the medium (30 ; 130 ; 230) and on which the bundle of rays is incident at an oblique angle on that side which faces away from the medium ; means (32, 33 ; 232, 233) for generating a measuring ray (58 ; 158 ; 258) having an intensity which depends on the refractive index of the medium, and a reference ray (56 ; 156 ; 256) having an intensity which depends on the refractive index, which rays are derived from the bundle of rays which are incident on the boundary surface (24 ; 124 ; 224) ; evaluating means (51 ; 151 ; 251) for determining a quantity which represents the intensity ratio of the measuring and reference rays, said evaluating means comprising a measuring light receiver (64 ; 164 ; 264), and a reference light receiver (50 ; 150 ; 250) ; and indicating means for indicating said quantity ; characterized in that the means for generating the measuring and reference rays consist of two adjoining regions (32, 33 ; 232, 233) of the boundary surface (28 ; 128 ; 228), which regions are illuminated by respective portions of the bundle of rays (54 ; 154 ; 254), one of said regions is transparent, the other of said regions is mirror-coated, the medium (30 ; 130 ; 230) directly contacts the transparent region (33 ; 133) and is in heat-conducting connection with at least part of the mirror-coated region (32 ; 232).

2. A refractometer according to claim 1, characterized in that the boundary surface (28 ; 128 ; 228) on that side which faces the contacting medium (30 ; 130 ; 230) is constituted by a protective disc (26 ; 126 ; 226), which is connected to the prism (22 ; 122 ; 222) which is contained in the prism-action optical body (42 ; 124 ; 242).

3. A refractometer according to claim 2, characterized in that the protective plate is constituted by a sapphire plate (26 ; 126 ; 226).

4. A refractometer according to claim 1 or 2, chraracterized in that the prism-action optical body (42 ; 142) is provided with a planoconvex entrance lens (20 ; 120) and a planoconvex exit lens (38 ; 138) on the incident side and/or the emergent side.

5. A refractometer according to any of claims 1 to 4, characterized in that a glass wedge (40) is disposed in the path of the light emerging from the prism-action optical body (42) and is adapted to divide the measuring ray (58) and the reference ray (56) emergent from the prism-action optical body (42) into a reference light region and a measuring light region.

6. A refractometer according to claim 5, characterized in that the light-refracting glass wedge (40) comprises a mirror-coated region (44) on the incident side (48), on which the reference ray (56) is deflected, and the measuring ray (58) is deflected or reflected on the underside (60) of the wedge (40).

7. A refractometer according to any of claims 3 to 6, characterized in that the prism-action optical body (42) has a rectangular bottom surface (24), the circular sapphire disc (26), which carries the active boundary surface (34) contacted by the medium, is provided on the bottom surface (24), and the active surface (34) is smaller than the diameter of the sapphire disc (26).

8. A refractometer according to any of the preceding claims, characterized in that the signal gererated by the reference light receiver (50 ; 150 ; 250) is delivered to a controller (9 ; 109 ; 209), which stabilizes the light source (10 ; 113 ; 213) in brightness and/or wavelength bandwidth.

9. A refractometer according to any of the preceding claims, characterized in that the prism-action optical body (42 ; 142 ; 242) is divided into a reference light prism (22') and a measuring light prism (22").

10. A refractometer according to claim 9, characterized in that the reference light prism (22') and the measuring light prism (22") are joined by adhesive.

11. A refractometer according to claim 9 or 10, characterized in that the reference light prism (22') and the measuring light prism (22") are joined by a dark interlayer.

12. A refractometer according to any of claims 5 to 11, characterized in that the glass wedge (40) is mounted on a carrier (41).

13. A refractometer according to claim 12, characterized in that the light-refracting wedge (40') has the same width as that mirror-coated region (32) of the boundary surface (28) which generates the reference ray and that the exposed region of the carrier (41) has a reflecting surface (60') for reflecting the measuring ray (58).

14. A refractometer according to claim 7, characterized in that the mirror-coated region (32) of the prism-action optical body (42) extends in the confonguration of a rectangle along a marginal region of the bottom surface (24) of the prism and covers part (36) of the sapphire disc.

15. A refractometer according to any of claims 5 to 14, characterized in that the prism-action optical body (42) and/or the wedge (40) consists of glass or Plexiglas or a similar glasslike substance.

16. A refractometer according to any of the preceding claims, characterized in that a shield (46 ; 146) is so attached to the glass wedge (40) that the reference ray (56 ; 156) and the measuring ray (58 ; 158) do not influence each other.

17. A refractometer according to any of the preceding claims, characterized in that a boundary surface (224) of the prism-action optical (222) is disposed opposite to the base surface in such a manner that the base surface covers the bottom surface (224) in the direction of projection.

18. A refractometer according to claim 17, characterized in that an oblique surface (218) of a prism is designed as a reflecting surface in such a manner that the incident bundle of rays (254) is directed to the mirror-coated region (232) and the transparent region (233).

19. A refractometer according to claim 17 or 18, characterized in that a second oblique surface of the prism consists of a mirror surface (261) for separately reflecting the measuring ray (258) and the reference ray (256).

20. A refractometer according to any of the preceding claims, characterized in that the measuring light receiver (64 ; 164 ; 264) and reference light receiver (50 ; 150 ; 250) are combined in an overall receiver and the signals generated by it are adapted to be delivered to the evaluating device in alternation.

21. A refractometer according to claims 1 to 20, characterized in that the light source (10) comprises at least one infrared lamp or a halogen lamp or another lamp having a predetermined frequency spectrum.

22. A refractometer according to any of claims 1 to 21, characterized in that ultrasonic sound is continuously or intermittently directed onto the boundary surface (28) and the boundary surface is cleaned by the flow of the medium (30) to be examined.

23. A refractometer according to any of claims 7 to 22, characterized in that the mirror-coated region (32) is disposed in the protective disc (26) or in the active boundary surface (34).

**Revendications**

1. Réfractomètre pour la surveillance de l'indice de réfraction d'un milieu, surtout d'un processus continu, comprenant une source de lumière (10 ; 113 ; 213) pour produire un faisceau de rayons (54 ; 154 ; 254), un corps de prismes optiques (42 ; 142 ; 242) qui présente une surface limite plane (28 ; 128 ; 228) au moins partiellement en contact avec le milieu (30 ; 130 ; 230), surface limite sur laquelle est projeté le faisceau de rayons à partir du côté distal du milieu, des moyens (32, 33 ; 232, 233) pour produire un rayon de mesure (58 ; 158 ; 258) ayant une intensité qui est fonction de l'indice de réfraction du milieu, ainsi que pour la production d'un rayon témoin (56 ; 156 ; 256) dont l'intensité ne dépend pas de l'indice de réfraction, lesdits rayons provenant du faisceau de rayons frappant la surface limite (24 ; 124 ; 224), un dispositif de dépouillement (51 ; 151 ; 251) pour former une valeur correspondant au rapport des intensités du rayon de mesure et du rayon témoin, dispositif comprenant un récepteur optique de mesure (64 ; 164 ; 264) et un récepteur optique témoin (50 ; 150 ; 250) ainsi qu'un dispositif d'affichage de ladite valeur, caractérisé par le fait que les moyens pour la production du rayon de mesure et du rayon témoin consistent en deux zones (32, 33 ; 232, 233) avoisinantes et éclairées chacune par une partie du faisceau de rayons (54 ; 154 ; 254) de la surface limite (28 ; 128 ; 228), qui sont des zones éclairées dont une est transparente et l'autre métallisée, le milieu (30 ; 130 ; 230) étant en contact direct avec la zone transparente (33 ; 233) et au moins partiellement en contact par conduction thermique avec la zone métallisée (32 ; 232).

2. Réfractomètre selon la revendication 1, caractérisé par le fait que la surface limite (28 ;

128 ; 228) est formée sur le côté proximal du milieu contactant (30 ; 130 ; 230) par une vitre de protection (26 ; 126 ; 226) qui est raccordée à un prisme (22 ; 122 ; 222) logé dans le corps à prismes optiques (42 ; 142 ; 242).

3. Réfractomètre selon la revendication 2, caractérisé par le fait que la vitre de protection consiste en une vitre de saphir (26 ; 126 ; 226).

4. Réfractomètre selon les revendications 1 ou 2, caractérisé par le fait que le corps à prismes optiques (42 ; 142) comprend du côté de l'incidence de la lumière et/ou de la réflexion de la lumière une lentille d'entrée plan convexe (20 ; 120) ou une lentille de sortie plan-convexe (38 ; 138).

5. Réfractomètre selon l'une des revendications 1 à 4, caractérisé par le fait que dans le trajet optique de la lumière sortant du corps à prismes optiques (42) un cône de verre (40) est disposé au moyen duquel le rayon de mesure (58) et le rayon témoin (56) sortant du corps à prismes optiques (42) peuvent être séparés en plage de lumière témoin et plage de lumière de mesure.

6. Réfractomètre selon la revendication 5, caractérisé par le fait que le cône de verre (40) réfractant la lumière comporte une zone métallisée (44) du côté proximal de la lumière incidente, sur laquelle le rayon témoin (56) est dévié, et que le rayon de mesure (58) est dévié ou réfléchi à la base (60) du cône (40).

7. Réfractomètre selon l'une des revendications 3 à 6, caractérisé par le fait que le corps à prismes optiques (42) comporte une base rectangulaire (24) et que sur la base (24) est disposé le disque de saphir (26) portant la surface limite active, c'est-à-dire en contact avec le milieu, en forme de cercle, la surface active (34) étant plus petite que le diamètre du disque de saphir (26).

8. Réfractomètre selon l'une des revendications précédentes, caractérisé par le fait que le signal produit par le récepteur de lumière témoin (50 ; 150 ; 250) est communiqué à un régulateur (9 ; 109 ; 209) qui stabilise la source lumineuse (10 ; 113 ; 213) quant à l'intensité lumineuse et/ou la gamme d'ondes.

9. Réfractomètre selon l'une des revendications précédentes, caractérisé par le fait que le corps à prismes optiques (42 ; 142 ; 242) est subdivisé en prisme optique témoin (22') et un prisme optique de mesure (22").

10. Réfractomètre selon la revendication 9, caractérisé par le fait que le prisme optique témoin (22') est relié par une colle avec le prisme optique de mesure (22").

11. Réfractomètre selon les revendications 9 ou 10, caractérisé par le fait que le prisme optique témoin (22') est relié au prisme optique de mesure (22") par une couche intermédiaire sombre.

12. Réfractomètre selon l'une des revendications 5 à 11, caractérisé par le fait que le cône de verre (40) est logé sur un support (41).

13. Réfractomètre selon la revendication 12, caractérisé par le fait que la largeur du cône réfractant la lumière (40') correspond à la largeur de la zone métallisée (32) de la surface limite (28) produisant le rayon témoin et que la zone libre du support (41) comprend une surface réfléchissante (60') sur laquelle le rayon de mesure (58) est réfléchi.

14. Réfractomètre selon la revendication 7, caractérisé par le fait que la zone métallisée (32) sur le corps à prismes optiques (42) s'étend en forme de rectangles le long d'une zone marginale dans la base du prisme (24) et recouvre une partie (36) du disque de saphir.

15. Réfractomètre selon l'une des revendications 5 à 14, caractérisé par le fait que le corps à prismes optiques (42) et/ou le cône (40) est en verre ou en plexiglas ou en une autre substance semblable à du verre.

16. Réfractomètre selon l'une des revendications précédentes, caractérisé par le fait que sur le cône de verre (40) est montée une protection (46 ; 146) de manière à ce que le rayon témoin (56 ; 156) et le rayon de mesure (58 ; 158) ne s'influencent pas mutuellement.

17. Réfractomètre selon l'une des revendications précédentes, caractérisé par le fait qu'une surface de délimitation (224) du corps à prismes optiques (222) est disposée opposée à la surface base de manière à ce que la surface de base recouvre la surface de fond (224) en direction de la projection.

18. Réfractomètre selon la revendication 17, caractérisé par le fait qu'une surface oblique prismatique (218) est formée en tant que surface réfléchissante de manière à ce que le faisceau de rayons incidents (254) est dirigé sur la zone métallisée (232) et la zone transparente (233).

19. Réfractomètre selon l'une des revendications 17 ou 18, caractérisé par le fait qu'une deuxième surface oblique du prisme est formée en tant que surface métallisée (261) sur laquelle le rayon de mesure (258) et le rayon témoin (256) sont réfléchis séparément.

20. Réfractomètre selon l'une des revendications précédentes, caractérisé par le fait que le récepteur de lumière de mesure (64 ; 164 ; 264) et le récepteur de lumière témoin (50 ; 150 ; 250) sont réunis en un récepteur d'ensemble et que les signaux qui en sont retirés peuvent être acheminés alternativement au dispositif de dépouillement.

21. Réfractomètre selon les revendications 1 à 20, caractérisé par le fait que la source de lumière (10) comporte au moins une diode infrarouge ou une lampe à iode ou une autre lampe ayant un spectre de fréquences prédéterminé.

22. Réfractomètre selon l'une des revendications 1 à 21, caractérisé par le fait que la surface limite (28) reçoit ou continuellement et/ou par impulsion des ultrasons et qu'elle est nettoyée par le courant du milieu à analyser (30).

23. Réfractomètre selon l'une des revendications 7 à 22, caractérisée par le fait que la zone métallisée (32) est disposée dans le disque de protection (26) ou la surface limite active (34).

**Fig. 1**

**Fig. 3**

**Fig. 2**

Fig. 4

Fig. 5

*Fig. 6*

*Fig. 7*